(19) **Europäisches Patentamt**
**European Patent Office**
**Office européen des brevets**

(11) **EP 4 672 387 A1**

(12) **EUROPEAN PATENT APPLICATION**

(43) Date of publication:
**31.12.2025 Bulletin 2026/01**

(21) Application number: **25179703.1**

(22) Date of filing: **29.05.2025**

(51) International Patent Classification (IPC):
*H01M 8/04014* (2016.01)   *H01M 8/04089* (2016.01)
*H01M 8/04111* (2016.01)   *F04B 35/00* (2006.01)
*F04B 41/06* (2006.01)   *B64D 27/355* (2024.01)
*B64U 50/32* (2023.01)

(52) Cooperative Patent Classification (CPC):
**B64D 27/355; B64U 50/32; F04B 35/04;**
**F04B 41/06; H01M 8/04014; H01M 8/04022;**
**H01M 8/04089; H01M 8/04111;** H01M 2008/1095;
H01M 2250/20; H01M 2250/407

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **26.06.2024 GB 202409184**

(71) Applicants:
• **Rolls-Royce plc**
**London N1 9FX (GB)**

• **Rolls-Royce Solutions Italia SRL**
**19021 Liguria (IT)**

(72) Inventors:
• **Tacconi, Jacopo**
**Derby, DE24 8BJ (GB)**
• **Butler, Philip**
**Derby, DE24 8BJ (GB)**
• **Bozzolo, Michele**
**Derby, DE24 8BJ (GB)**

(74) Representative: **Rolls-Royce plc**
**P.O. Box 31**
**IP Department ML-9**
**Derby Derbyshire DE24 8BJ (GB)**

(54) **FUEL CELL SYSTEM COMPRISING A POSITIVE DISPLACEMENT COMPRESSOR**

(57)     A fuel cell system 100 for propulsion of an aircraft or UAV comprises a fuel cell stack 102 comprising at least one fuel cell and a piston compressor 108 arranged to compress air provided to an input thereof and provide resulting compressed air from an output thereof to the cathode input of the fuel cell stack. The piston compressor, which is a positive displacement compressor, reduces the power required for air compression for a given target pressure rise compared to a dynamic or open-flow compressor, such as an axial, centrifugal or mixed-flow compressor, providing improved performance at altitude, and allowing fuel cell-based aircraft and UAV propulsion at very high altitudes up to 30 km, which has previously not been possible.

Fig. 1

## Description

### FIELD

The invention relates to fuel cell systems, particularly although not exclusively to fuel cell systems for propulsion of aircraft and unmanned aerial vehicles (UAVs), especially aircraft and UAVs for operation at high altitude.

### BACKGROUND

Fuel cell systems, particularly those based on polymer-electrolyte (proton-exchange) membrane (PEM) fuel cell stacks, are of interest for aircraft propulsion applications as they offer the possibility of operation without production of carbon dioxide at the point of use. Such systems are also of interest as a means of propulsion for UAVs. The air supply to the cathode side of a fuel cell stack is typically pressurised above sea-level atmospheric pressure (~100 kPa) in order to generate a useful level of electrical output power. This is particularly important in aeronautical applications since atmospheric pressure decreases with increasing altitude. Low ambient atmospheric pressure is particularly problematic at very high altitudes, such as 20 km for example, tending to preclude use of fuel cell stacks in very high-altitude UAVs. Fuel cell stack operation presents difficulties due to low ambient air pressure in the tropopause and lower stratosphere (11 - 30 km altitude).

At 20 km altitude (about 65,000 feet), atmospheric pressure drops to about 5.5 kPa, requiring at least a pressure rise factor of 18 to achieve sea-level atmospheric pressure at the cathode inlet of a fuel cell stack. Achieving this pressure rise with conventional open flow (dynamic) turbomachinery (axial or centrifugal compressors) requires a significant number of stages and operational high speeds. Furthermore, specific speed and specific diameter analysis shows that the resulting compression efficiency is not high, as the combination of the required pressure rise, low air density (~0.09kg/m$^3$ at 65,000 ft) and low mass flow rate of air demanded by a fuel cell stack (~0.1kg/s per 100 kW on standard design assumptions) leads to very large adiabatic heads.

Operating a fuel cell stack at pressures higher than sea level atmospheric pressure is beneficial for both efficiency and gravimetric power density, but this is even more difficult at very high altitudes than achieving sea level atmospheric pressure. Furthermore, the associated compression power consumption is very severe, and can account for 30% or more of the power produced by the fuel cell stack, depending on selected pressure rise and machine efficiency. This imposes a significant challenge in achieving closure on overall aircraft design, as balance-of-plant (BoP) parasitic power consumption drives fuel cell stack power plant (and aircraft/UAV) performance and weight to an unfeasible region of design space.

Currently, UAVs are powered by internal combustion engines and/or small gas turbine engines, for example reciprocating internal combustion engines fuelled by liquid hydrogen, and very high altitudes UAVs are solar and/or battery powered, leading to limited payload and endurance. Current fuel cell systems are not suitable as a means of propulsion for so-called high altitude, long endurance ("HALE") UAVs, due to low efficiency and low gravimetric power density at high altitudes.

### SUMMARY

A first aspect of the invention provides a fuel cell system for propulsion of an aircraft, the fuel cell system comprising a fuel cell stack having at least one fuel cell, and a positive displacement compressor arranged to compress air provided to an input thereof and provide resulting compressed air from an output thereof to the cathode input of the fuel cell stack. The fuel cell system may further comprise a surge tank or plenum volume, the positive displacement compressor being arranged to provide the compressed air from the output thereof to the cathode input of the fuel cell stack via the surge tank or plenum volume. Whether the surge tank/plenum volume is present or not, the fuel cell system may further comprise a dynamic compressor arranged to compress air input thereto and output resulting compressed air to the input of the positive displacement compressor. If the dynamic compressor is present, then the fuel cell system may further comprise a heat-exchanger arranged to cool compressed air output by the dynamic compressor prior to input of the compressed air to the positive displacement compressor. The dynamic compressor may be driven by an electric motor which derives electrical power from the fuel cell stack. Alternatively, the dynamic compressor may be comprised in a turbocharger which includes a turbine arrange to drive the dynamic compressor and to receive cathode exhaust from the cathode output of the fuel cell stack. In this case, the fuel cell system may further comprise at least one of (a) a recuperator arranged to transfer heat from compressed air output by the positive displacement compressor to the cathode exhaust output by the fuel cell stack prior to input of the cathode exhaust to the turbine of the turbocharger, and (b) a combustor arranged to heat cathode exhaust output from the cathode output of the fuel cell stack prior to input of the cathode exhaust to the turbine of the turbocharger by combusting either a portion of a flow of hydrogen fuel input to the fuel cell system or unreacted hydrogen output from the anode output of the fuel cell stack. If the turbocharger is not present, the fuel cell system may further comprise some other expansion device, i.e. a positive-displacement expander or a dynamic expander, arranged to receive cathode exhaust from the cathode output of the fuel cell stack. In this case, the fuel cell system may further comprise at least one of (a) a recuperator arranged to transfer heat from compressed air output by the positive displacement compressor to the cathode exhaust output by the fuel cell stack prior to input of the cathode exhaust to the expander, and (b) a combustor arranged to heat cathode exhaust output from the cathode output of the fuel cell stack prior to input of the cathode exhaust to the expander by combusting either a portion of a flow of hydrogen fuel input to the fuel cell system or unreacted hydrogen output from the anode output of the fuel cell stack.

The fuel cell system may further comprise a piston engine arranged to receive and combust either a portion of a flow of hydrogen fuel input to the fuel cell system or unreacted hydrogen from the anode output of the fuel cell stack and to provide mechanical power to the positive displacement compressor. The piston engine may be further arranged to receive cathode exhaust output from the cathode output of the fuel cell stack. The fuel cell system may further comprise an electrical generator arranged to receive mechanical power from the piston engine. The piston engine may be disengageable from and re-engageable with the positive displacement compressor.

The fuel cell system may comprise a heat-exchanger arranged to provide cooling of compressed air output from the positive displacement compressor prior to input of the compressed air to the cathode input of the fuel cell stack.

The positive displacement compressor may be piston compressor.

A second aspect of the invention provides a propulsion system for an aircraft or a UAV which is suitable for operation at altitudes up to 30 km, the propulsion system comprising a fuel cell system according to the first aspect and an electric propulsor arranged to receive electrical power from the fuel cell system.

**BRIEF** DESCRIPTION OF THE DRAWINGS

Embodiments are described below by way of example only and with reference to the accompanying drawings, in which:

Figures 1, 3-5, 8 & 9      show first to sixth example fuel cell systems respectively;

Figure 2                      shows plots of ideal compression power versus pressure ratio for a piston compressor and a dynamic (open-flow) compressor;

Figure 6                      shows plots of ideal compressor power versus cathode air inlet pressure for four different fuel cell systems each having a different respective air compressor arrangement;

Figure 7                      shows plots of ideal compressor power versus overall pressure ratio for recovery of power from the cathode output of a fuel cell stack using a piston expander and turbine;

Figures 8 & 9                shows seventh and eight example fuel cell systems, each comprising a respective piston engine;

Figure 10 & 11               each show a propulsion system comprising an example fuel cell system; and

Figure 12                    shows an aircraft comprising two propulsion systems, each being as shown in either Figure 10 or in Figure 11.

DETAILED DESCRIPTION

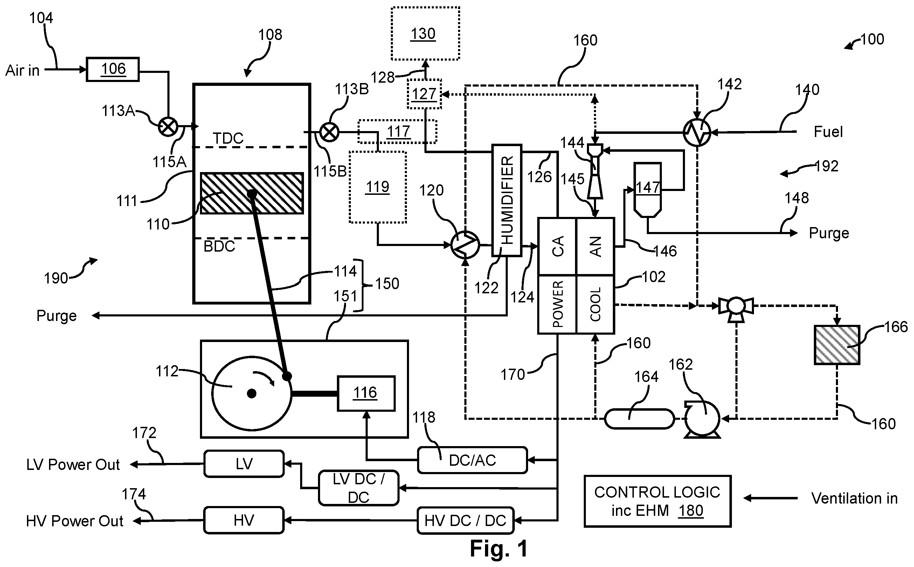

**Figure 1** shows a first example fuel cell system 100 suitable for use with an electric propulsor (not shown) within an aircraft or UAV to provide propulsion. The system 100 comprises a polymer electrolyte (proton exchange) membrane (PEM) fuel cell stack 102 having cathode and anode inputs 124, 145, anode and cathode outputs 126, 146 and an electrical output 170. The fuel cell system 100 has cathode-side plant 190 comprising an air input 104, a filter 106, a piston compressor 108, a heat-exchanger 120 and a humidifier 122, and anode-side plant 192 comprising a fuel (hydrogen) input 140, a heat-exchanger 142, an ejector 144 and a water-trap 146. The fuel cell stack 102 is cooled in operation by a cooling-loop 160 comprising a pump 162, a de-ioniser 164 and a cooling fluid/air heat-exchanger 166. The cooling fluid may be water-glycol or some other suitable fluid. The piston compressor 108 comprises a piston 110 which is movable with a cylinder 111 by a driving arrangement 150 which comprises a drive system 151 and a mechanical linkage 114. The drive system 151 includes a crankshaft 112 and an electric motor 116 which draws electrical power from the electrical output 170 of the fuel cell stack 102 via a DC/AC converter 118. Air is input to and output from the cylinder 111 of the piston compressor 108 at input 115A and output 115B respectively, via input and output valves 113A, 113B. The electrical output 170 of the fuel cell stack 102 is conditioned to provide low- and high-voltage power outputs 172, 174.

In operation of the fuel cell system 100, gaseous or liquid hydrogen fuel under pressure is input at the fuel input 140, heated at the heat-exchanger 142 and provided in gaseous form to the anode input 145 via the ejector 144. Unreacted hydrogen output at the anode output 146 is re-circulated to the anode input 145 by the ejector 144 via a water trap 147. In one cycle of the piston compressor 108, air input to the fuel cell system 100 at the air input 104 is input to the cylinder 111 of the piston compressor 108 via the filter 106 and (open) valve 113A as the upper surface of the piston 110 moves from top-dead-centre (TDC) to bottom-dead-centre (BDC), over which period the output valve 113B is closed. The input valve 113A is then closed and the piston 110 moves upward within the cylinder 111 until its upper surface reaches TDC. The output valve 113B is then opened and compressed air passes to the cathode input 124 via the heat-exchanger 120 and the humidifier 122, completing the cycle. Cathode exhaust output at the cathode output 126 passes to a system exhaust 128 via the humidifier 122 (allowing water recovery). Operation of the valves 113A, 113B is controlled by control logic 180. The anode of the fuel cell stack 102 may be purged by means of a purge outlet 148 of the water trap 147.

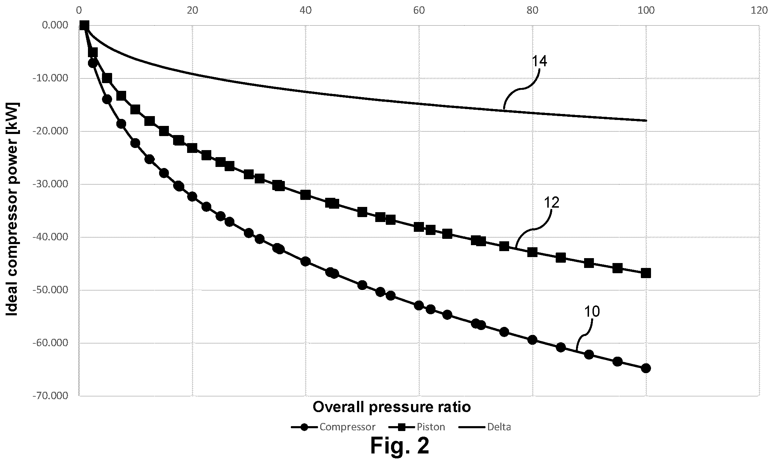

A positive-displacement (closed-flow) compressor, in this case the piston compressor 108, reduces the power consumption required for air compression for a given target pressure rise compared to a dynamic (open-flow) device, such as an axial or centrifugal compressor. This is illustrated in **Figure 2,** which shows plots 10, 12 of ideal compressor power versus overall pressure ratio achieved for a dynamic (open-flow) compressor and a positive-displacement (closed-flow) compressor respectively; the difference between these ideal powers is shown by plot 14. (Ideal compressor power is shown as negative in Figure 2 by convention as this is power used by the system 100 rather than output power produced by it). A positive-displacement (closed-flow) compressor requires less energy to compress a unit mass of air compared to a dynamic (open-flow) device as there is no flow work term that accounts for the energy cost of pushing fluid flow across the device. The compression work W done per cycle of operation by a closed-flow compressor is given by

$$W = m(u_1 - u_2)$$

where $u_1$ and $u_2$ are the specific internal energy at the inlet and outlet of the compressor respectively and m is the mass of gas introduced per cycle. The amount of power required by a closed-flow compressor is also a function of machine speed (RPMs). For a given flow rate, there is approximately a 30% difference in the ideal power consumption required, for a given pressure ratio, between an open-flow compressor and a closed-flow compressor. This difference is even greater once the isentropic efficiencies of the compressors are accounted for, as a piston compressor is generally a more efficient and compact device, given the low flow rates required by a fuel cell stack. Based on an operating output power of ~100 kW required of a propulsive fuel cell stack, a pressure ratio higher than 18 is needed at 65,000 feet, leading to a piston compression ratio of about 8, which is reasonably achievable in a propulsion application. Operating a fuel cell stack at higher pressure improves its efficiency and gravimetric power density, but the power required for compression also increases, as does the compression ratio needed to deliver the higher pressure.

In operation of the fuel cell system 100, power for air compression comes from the fuel cell stack 102 in the form of electrical power which is converted into mechanical power by the driving arrangement 150. Other arrangements may be employed to drive the piston compressor 108. For example, linear and opposed pistons may be used, for which direct electrical actuation and variable compression ratios are possible, improving the compactness and power density of the fuel cell system 100. The driving arrangement 150 may therefore be substituted by a direct electrical actuation system. Alternative high-power density piston compression solutions can also be used.

The output mass flow rate of a piston compressor can provide a particularly good match with the mass flow rate of air required at the cathode input of a fuel cell stack. The swallowing capacity of piston compressor is dictated by its swept volume, so that to achieve a high flow rate, the physical volume of the piston compressor must be large. Conventionally, this is regarded as a limitation with piston-compressors and similar closed-flow (positive displacement) devices. However, since a fuel cell stack needs to be operated at relatively small mass flow rates of air (and high pressure ratios, as dictated by altitude constraints), the design of an open-flow (dynamic) compressor for a fuel cell stack is challenging as the adiabatic head across the compressor is large, implying that high speeds and/or many stages are needed to meet the required pressure demand. A closed-flow compression system can be designed to have a much better match with the mass flow rate of air for a fuel cell stack, resulting in a simpler design task, and higher efficiencies at acceptable swept volumes.

In a variant of the fuel cell system 100, a plenum volume or surge tank 119 is included in the cathode-side plant 190 between the output valve 113B and the heat-exchanger 120 to smooth out pressure fluctuations produced by the piston compressor 108, particularly during transient operation, and to ensure appropriate air temperature and pressure is maintained at the cathode input 124 during all operating conditions.

Another advantage of the fuel cell system 100 is that the internal peak gas pressure and temperature within the piston-compressor 108 are far lower than those of an internal combustion engine. Cooling the piston assembly is therefore not a difficult challenge given the ambient environment cold sink temperature, for example ambient atmospheric temperature is 216 K at altitudes between 11 km and 30 km. If liquid hydrogen is stored as a fuel, then it may also be used for cooling. Depending on the delivery pressure (and piston compression ratio), the piston-compressor 108 may alternatively be air-cooled, or even uncooled for a particular design.

In a variant of the fuel cell system 100, the fuel cell stack 102 may be of a type other than a PEM fuel cell stack. All types of fuel cell show significant improvement in performance and power density with increasing cathode input pressure above ambient atmospheric pressure, particularly between 1 bar and 2.5 bar. Above 2.5 bar, there is a trade-off between improved performance resulting from higher cathode pressure and the power cost of the balance-of-plant needed to produce the higher cathode pressure. Optimal cathode input pressure may be in the range 1.8 to 2.5 bar. In other variants of the fuel cell system 100, the piston compressor 108 is substituted by another type of positive-displacement (closed flow) compressor, for example a membrane compressor, a lobe compressor, a claw compressor, a screw compressor or a scroll compressor.

Power associated with the cathode exhaust output from the cathode output 126 of the fuel cell stack 102 be recovered using an expander 130 arranged to receive the cathode exhaust. The expander 130 may be a turbine or a closed-flow, piston-type expander or similar device. In order to increase the power output of the expander 130, the cathode exhaust may be heated by a combustor 127 prior to input to the expander 130. The combustor 127 may be arranged to combust a portion of a flow of hydrogen input at the fuel input 140. Alternatively, the combustor 127 may combust unreacted hydrogen output at the anode output 146 of the fuel cell stack 102, in which case the ejector 144, water trap 147 and purge output 148 are dispensed with. Additionally or alternatively, a recuperator 117 may be used to transfer heat from compressed air output from the piston compressor 108 to the cathode exhaust prior to input thereof to the expander 130.

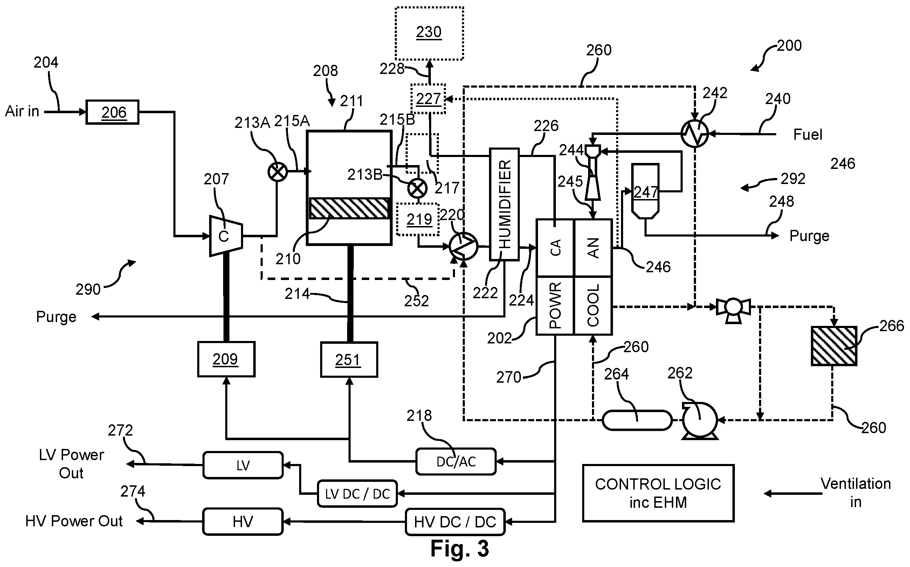

In **Figure 3,** in which parts are labelled with reference numerals differing by 100 from those labelling corresponding parts in Figure 1, a second example fuel cell system 200 comprises a dynamic (open-flow) booster compressor 207 in cathode-side plant 290 between filter 206 and piston-compressor 208. The booster compressor 207 is driven by an electric motor 209 which is driven by electrical power drawn from electrical output 270 of fuel cell stack 202 via DC/AC converter 218. The booster compressor 207 provides a small pressure rise, for example a pressure ratio between 1.5 and 4.5, and may for example take the form of a small centrifugal impeller. Most of the pressure rise between air inlet 204 and cathode input 224 is achieved by the piston compressor 208. The presence of the booster compressor 207 allows the size of the piston compressor 208 (or its swept volume) to be significantly reduced. This is because the booster compressor 207 increases the air density at inlet 215A of the piston-compressor 208 (i.e. between valve 213A and the inlet of cylinder 211) and reduces the volume flow rate of air required to be input to cathode input 224 of fuel cell stack 202 for a given mass flow rate of air input to the cathode input 224 and a given speed of the booster compressor 207. The displacement required of piston 210 may be reduced by increasing its speed. The cathode-side plant 290 may optionally include a bypass line 252 to couple the output of the dynamic booster compressor 207 directly to the heat-exchanger 220 at lower altitudes, for which the overall pressure ratio produced by both compression devices may not be required, thus saving power.

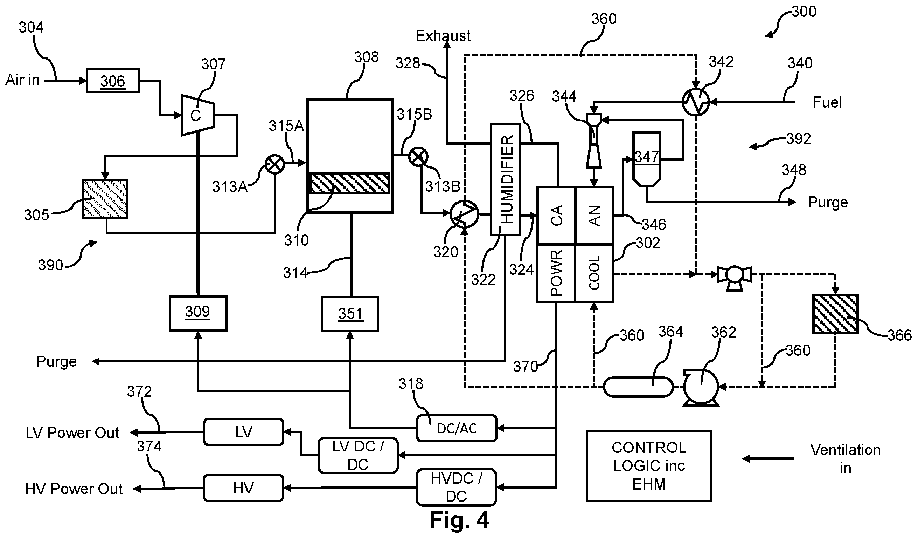

In **Figure 4,** in which parts are labelled with reference numerals differing by 100 from those labelling corresponding parts in Figure 3, a third example fuel cell system 300 comprises a heat-exchanger 305 between dynamic booster compressor 307 and piston-compressor 308. For operation at high altitudes, e.g. 11 km to 30 km, at which ambient atmospheric temperature is 216 K, the heat-exchanger 305 may be very compact due to low ambient temperature. The heat-exchanger 305 provides intercooling of compressed air between the dynamic booster compressor 307 and the piston compressor 308, improving the overall efficiency of air compression achieved by the two compressors 307, 308.

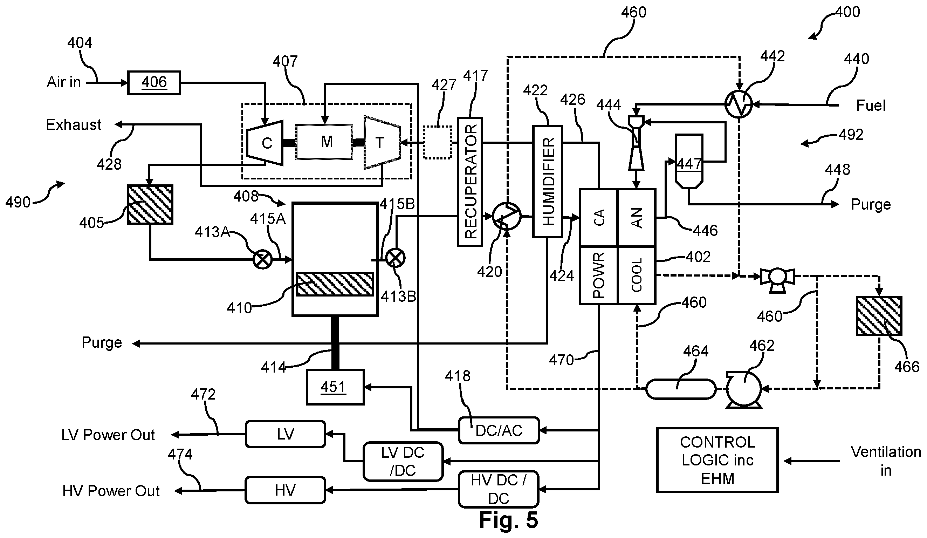

In **Figure 5,** in which parts are labelled using reference numerals differing by 100 from those labelling corresponding parts in Figure 4, a fourth example fuel cell system 400 comprises cathode-side plant 490 including a recuperator 411 and a turbocharger 407. The recuperator 411 transfers heat from output 415B of piston compressor 408 to the turbine inlet of the turbocharger 407. The turbocharger 407 operates to recover heat energy in the cathode exhaust produced by fuel cell stack 402 as well as heat transferred from compressed air output at the output 415B of the piston-compressor 408, and uses this heat energy for compression of air at the compressor C of the turbocharger 407. The rate at which heat energy is recovered by the turbine T of the turbocharger 407 may be inadequate to provide sufficient power for the compressor C of the turbocharger 407; the turbocharger 407 therefore comprises an electric motor M driven by electrical power from electrical output 470 of fuel cell stack 402 after DC-to-AC conversion at inverter 418. In a variant of the fuel cell system 400, a catalytic combustor 427 is included in the cathode-side plant 490 immediately before the turbine T of the turbocharger 470, obviating the need for the turbocharger 407 to include an electric motor M. The catalytic combustor 427 may for example be arranged to combust a portion of a hydrogen flow input at fuel input 440 or to combust unreacted hydrogen output from anode output 446 of the fuel cell stack 402 (in this case ejector 444, water trap 447 and purge output 448 are omitted). In another variant of the fuel cell system 400, the turbocharger 407 is replaced with a closed-flow expander, such as a piston expander, which is arranged to produce compression of air which is input at air input 404. In other variants of the fuel cell system 400, the piston compressor 408 is substituted by another type of positive displacement compressor, for example a scroll compressor, a screw compressor, a claw compressor, a lobe compressor or a membrane compressor.

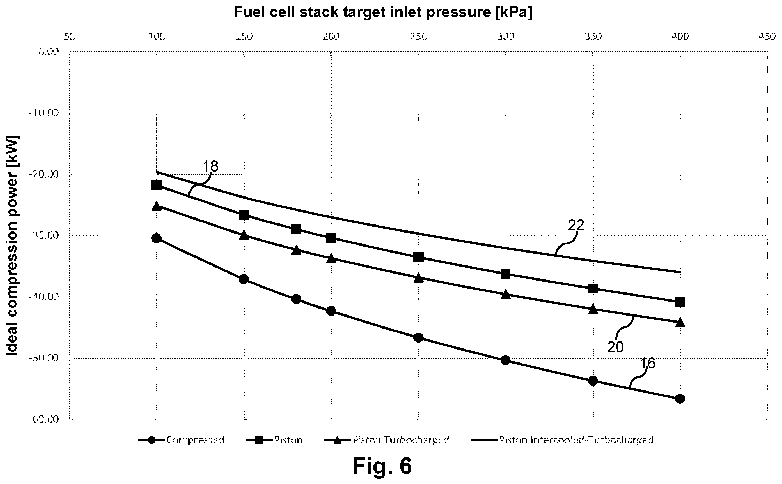

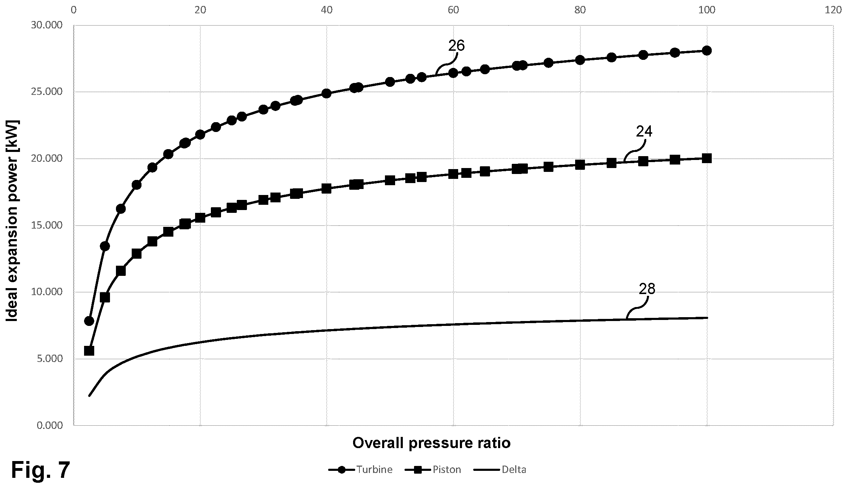

**Figure 6** shows a plot 16 of ideal compressor power versus cathode inlet pressure for a fuel cell system having a dynamic (open-flow) compressor. Plots 18, 20 and 22 show ideal compressor power versus cathode inlet pressure for equivalent systems having a piston compressor (plot 18), a piston compressor and a turbocharger (plot 20) and a piston compressor, a turbocharger and an intercooler (plot 22). Each of the latter three systems shows improved efficiency compared to the fuel cell system having a dynamic (open-flow) compressor (plot 16). (Ideal compressor power is shown as negative in Figure 6 by convention since this is power used by the fuel cell system rather than power produced by it). **Figure 7** shows plots of ideal power recovery versus overall pressure ratio for a piston expander (plot 24) and a turbine (plot 26). Plot 28 represents the difference between the plots 26, 28.

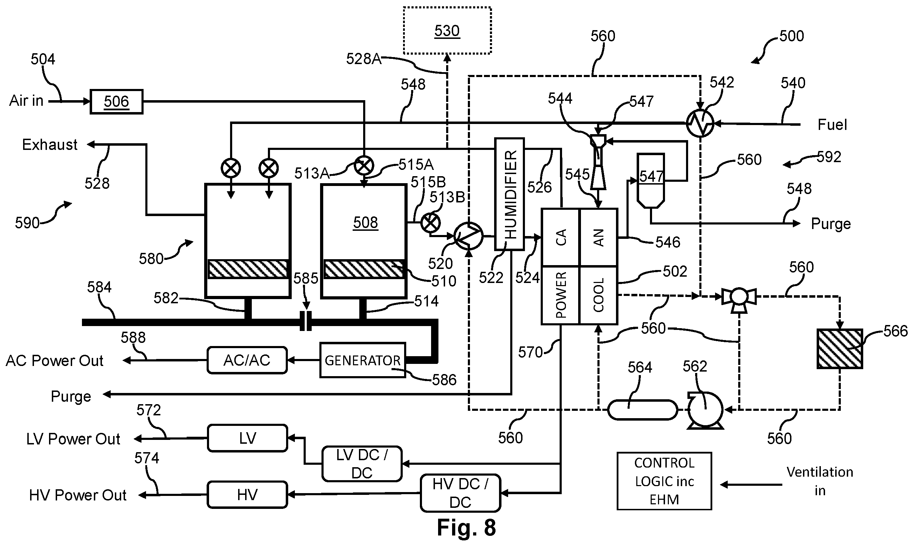

**Figure 8** shows a fifth example fuel cell system 500, parts of which are labelled using reference numerals differing by 100 from those labelling corresponding parts in Figure 5. Cathode-side plant 590 comprises a piston engine 580 having an output shaft 582 and is arranged to receive and combust a portion of a flow of hydrogen provided at fuel input 540 as well as cathode exhaust output from fuel cell stack 502 at cathode output 526. Combustion products and cathode exhaust exit the fuel cell system 500 at system exhaust 528. The piston engine 580 provides mechanical power to piston compressor 508 via a mechanical linkage 584. Since the output power of the piston engine 580 substantially exceeds that required by the piston compressor 508, the mechanical linkage 584 also couples the output shaft 582 of the piston engine 580 to an electrical generator 586 to provide an additional electrical power output 588. The mechanical linkage 584 may also provide mechanical power to additional aircraft/UAV systems and/or main shaft power to a propulsive fan or propeller.

In a variant of the fuel cell system 500, cathode exhaust output from the fuel cell stack 502 at cathode output 526 is either output from the system 500 at an output 528A or passed to a closed flow expander 530 (e.g. a piston expander) or to a turbine for recovery of heat energy within the cathode exhaust. In another variant of the fuel cell system 500, the functions of the piston engine 580 and the piston compressor 508 may be combined into a single cylinder arrangement, however using separate assemblies reduces the risk of contamination of the fuel cell stack 502 by combustion products.

The piston engine 580 may be mechanically disengaged from the piston compressor 508 by means of a clutch 585 and arranged to directly drive a propulsive fan or propeller. The piston engine 508 may then be used directly for propulsion during high-power operations such as take-off or climbing at attitude (with the piston compressor 508 and fuel cell stack 502 not operational). The piston engine 580 may be reengaged with the piston compressor 508 (and disengaged with the fan or propeller), with the fuel cell stack 502 operational, during lower-power parts of a flight cycle such as cruise and descent.

The net power output provided by the piston engine 580 allows design flexibility. For a given total power output, the size of the fuel cell stack 502 can be reduced since some of the total output power of the fuel cell system 500 is provided by the piston engine 580. Alternatively, the heat input to the piston engine 580 may be designed only to offset balance-of-plant energy costs improving fuel efficiency and/or to optimise the power split between the fuel cell stack 502 and the piston engine 580 across the whole flight envelope of an aircraft or UAV comprising the fuel cell system 500.

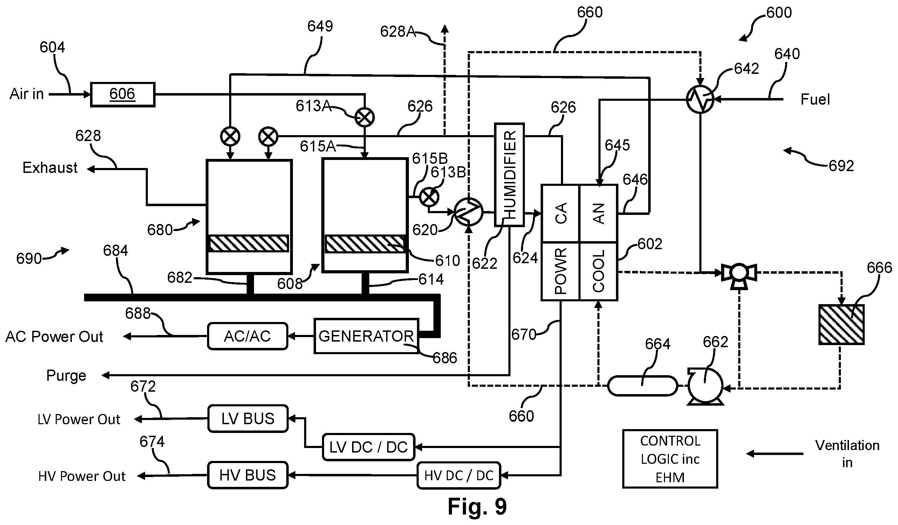

**Figure 9** shows a sixth example fuel cell system 600 which is similar to the fuel cell system 500 of Figure 8. Parts of the fuel cell system 600 are labelled with reference numerals differing by 100 from those labelling corresponding parts in Figure 8. In the fuel cell system 600, unreacted hydrogen fuel output at anode output 646 is provided as fuel to piston engine 680. The requirements for an anode purge, ejector and water trap are thus eliminated.

A further advantage of the fuel cell systems 500, 600 of Figure 8 and 9 is that the piston engine 508, 608 in each case is supplied with the cathode exhaust of a fuel cell stack 502, 602 which is typically high in water content and low in oxygen content. Depending on the equivalence ratio chosen for the fuel cell stack 502, 602 in either case, the combustion environment can be designed to be intrinsically lean (by controlling the excess oxygen supplied to each fuel cell) and the higher water content in the cathode outlet provides NOx mitigation and improves the output power of the piston engines 580, 680. Plenum volumes may be included within the cathode-side plants 590, 690 of the fuel cell systems 500, 600 between the piston compressors 508, 608 and the cathode inputs 524, 624 in order to mitigate transient pressure and temperature variations in the outputs of the piston compressors 508, 608. In variants of the fuel cell systems 500, 600, piston compressors 508, 608 are each substituted by another type of respective positive displacement compressor (e.g. scroll compressor, lobe compressor etc).

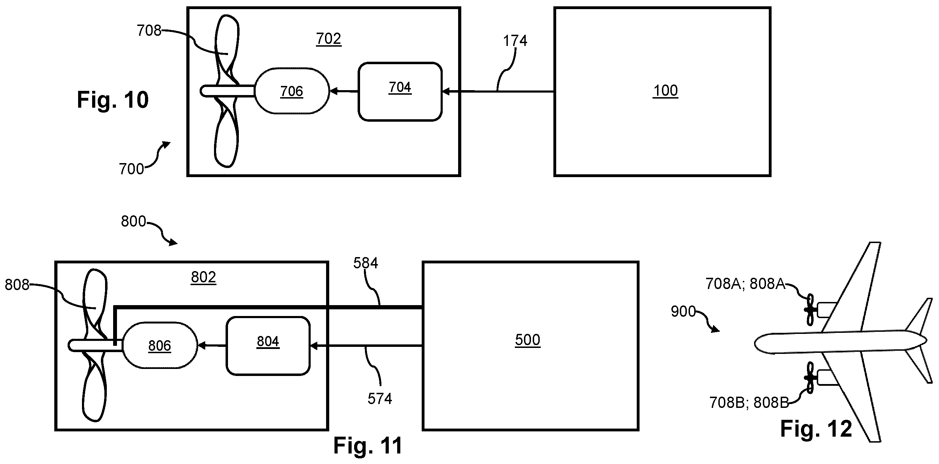

**Figure 10** shows a propulsion system 700 for an aircraft or UAV, the propulsion system 700 comprising the fuel cell system 100 of Figure 1 and an electric propulsor 702. The electric propulsor 702 comprises an electric motor 706 arranged to receive AC power from an inverter 704 and to drive a propeller or fan 708. The inverter 704 receives DC power from the fuel cell system 100 via the high-voltage DC output 174 thereof. In a variant of the propulsion system 700, the fuel cell system 100 is substituted by any one of the fuel cell systems 200, 300, 400 and 600 of Figures 3, 4, 5 and 9 respectively or variants thereof.

**Figure 11** shows a propulsion system 800 for an aircraft or UAV, the propulsion system 800 comprising the fuel cell system 500 of Figure 8 and an electric propulsor 802. The electric propulsor 802 comprises an electric motor 806 arranged to receive AC power from an inverter 804 and to drive a propeller or fan 808. The inverter 804 receives DC power from the fuel cell system 500 via the high-voltage DC output 574 thereof. When the clutch 585 disengages the piston engine 580 from the piston compressor 508, mechanical power from the piston engine 580 drivers the propeller or fan 808 directly via mechanical linkage 584.

**Figure 12** shows an aircraft or UAV 900 comprising two propulsion systems, each as described above with reference to either Figure 10 or Figure 11 and having a respective fan or propeller 708A, 708B (if the propulsion systems are as shown in Figure 10) or 808A, 808B (if the propulsion systems are as shown in Figure 11).

Various examples have been described, each of which comprise one or more combinations of features. Except where clearly mutually exclusive, any of the features may be employed separately or in combination with any other features and the invention extends to and includes all combinations and sub-combinations of one or more features described above.

**Claims**

1. A fuel cell system (100; 200; 300; 400; 500; 600) for propulsion of an aircraft, the fuel cell system comprising a fuel cell stack (102; 202; 302; 402; 502; 602) having at least one fuel cell, and a positive displacement compressor (108; 208; 308; 408; 508; 608) arranged to compress air provided to an input thereof (115A; 215A; 315A; 415A; 515A; 615A) and provide resulting compressed air from an output thereof (115A; 215A; 315A; 415A; 515A; 615A) to the cathode input (124; 224; 324; 424; 524; 624) of the fuel cell stack.

2. A fuel cell system (100; 200) according to claim 1 further comprising a surge tank (119; 219) or plenum volume and wherein the positive displacement compressor (108; 208) is arranged to provide the compressed air from the output thereof (115B; 215B) to the cathode input (124; 224) of the fuel cell stack (102; 202) via the surge tank or plenum volume.

3. A fuel cell system (200; 300; 400) according to claim 1 or claim 2 further comprising a dynamic compressor (207; 307; 407C) arranged to compress air input thereto and output resulting compressed air to the input (215A; 315A; 415A) of the positive displacement compressor (208; 308; 408).

4. A fuel cell system (300; 400) according to claim 3 further comprising a heat-exchanger (305; 405) arranged to cool compressed air output by the dynamic compressor prior to input of the compressed air to the positive displacement compressor.

5. A fuel cell system (400) according claim 3 or claim 4 wherein the dynamic compressor (407C) is comprised in a turbocharger (407) which includes a turbine (407T) arranged to drive the dynamic compressor and to receive cathode exhaust from the cathode output (426) of the fuel cell stack (402).

6. A fuel cell system according to claim 5 further comprising a recuperator (411) arranged to transfer heat from compressed air output by the positive displacement compressor to the cathode exhaust output by the fuel cell stack prior to input of the cathode exhaust to the turbine of the turbocharger.

7. A fuel cell system according to claim 5 or claim 6 further comprising a combustor (427) arranged to heat cathode exhaust output from the cathode output of the fuel cell stack prior to input of the cathode exhaust to the turbine of the turbocharger by combusting either a portion of a flow of hydrogen fuel input to the fuel cell system or unreacted hydrogen output from the anode output of the fuel cell stack.

8. A fuel cell system (100; 200) according to any of claims 1 to 4 further comprising an expander (130; 230) arranged to receive cathode exhaust from the cathode output (126; 226) of the fuel cell stack (102; 202).

9. A fuel cell system (100; 200) according to claim 8 further comprising a recuperator (117; 217) arranged to transfer heat from compressed air output by the positive displacement compressor (108; 208) to the cathode exhaust output by the fuel cell stack (102; 202) prior to input of the cathode exhaust to the expander.

10. A fuel cell system (100; 200) according to claim 8 or claim 9 further comprising a combustor (127; 227) arranged to heat the cathode exhaust prior to input of the cathode exhaust to the expander by combusting either a portion of a flow of hydrogen input to the fuel cell system or unreacted hydrogen output at the anode output of the fuel cell stack.

11. A fuel cell system (500; 600) according to claim 1 or claim 2 further comprising a piston engine (580; 680) arranged to receive and combust either a portion of a flow of hydrogen fuel input to the fuel cell system or unreacted hydrogen from the anode output (546; 646) of the fuel cell stack and to provide mechanical power to the positive displacement compressor (508; 608).

12. A fuel cell system (500; 600) according to claim 11 wherein the piston engine is further arranged to receive cathode exhaust output from the cathode output (526; 626) of the fuel cell stack.

13. A fuel cell system (500; 600) according to claim 11 or claim 12 wherein the piston engine is disengageable from and re-engageable with the positive displacement compressor.

14. A fuel cell system (100; 200; 300; 400; 500; 600) according to any preceding claim and comprising a heat-exchanger (120; 220; 320; 420; 520; 620) arranged to provide cooling of compressed air output from the positive displacement compressor prior to input of the compressed air to the cathode input of the fuel cell stack.

15. A fuel cell system (100; 200; 300; 400; 500; 600) according to any preceding claim wherein the positive displacement compressor is a piston compressor (108; 208; 308; 408; 508; 608).

**Fig. 1**

**Fig. 2**

EP 4 672 387 A1

Fig. 3

Fig. 4

Fig. 5

EP 4 672 387 A1

**Fuel cell stack target inlet pressure [kPa]**

**Fig. 6**

Fig. 7

EP 4 672 387 A1

Fig. 8

Fig. 9

Fig. 10

708

702

706 ← 704 ← 174 ← 100

700

Fig. 11

800

808

802

806 ← 804 ← 584 / 574 ← 500

Fig. 12

900

708A; 808A

708B; 808B

EP 4 672 387 A1

Europäisches
Patentamt

European
Patent Office

Office européen
des brevets

# EUROPEAN SEARCH REPORT

**Application Number**

EP 25 17 9703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/021702 A1 (INNOGY PLC [GB]; CONEY MICHAEL WILLOUGHBY ESSEX [GB] ET AL.) 13 March 2003 (2003-03-13) | 1,3-12, 14,15 | INV. H01M8/04014 H01M8/04089 |
| Y | * page 12, line 22 - page 19, line 26 * * figure 1 * | 2,13 | H01M8/04111 F04B35/00 F04B41/06 |
| X | DE 10 2012 007377 A1 (DAIMLER AG [DE]) 17 October 2013 (2013-10-17) | 1-12,14, 15 | B64D27/355 B64U50/32 |
| Y | * paragraph [0009] * * paragraph [0030] * * paragraph [0037] * * figures 1, 2 * | 13 | |
| Y | RAHMAN M. SQ. ET AL: "A Study on Gas Pressure Fluctuation Characteristics inside the Snubber and Pipe of Hydrogen", ADVANCES IN MECHANICAL ENGINEERING, [Online] vol. 2009, 1 January 2009 (2009-01-01), XP093331518, ISSN: 1687-8132, DOI: 10.1155/2009/138708 Retrieved from the Internet: URL:https://journals.sagepub.com/doi/pdf/10.1155/2009/138708> [retrieved on 2025-11-03] * abstract * * 1. Introduction * | 2 | |
| | | | TECHNICAL FIELDS SEARCHED (IPC) |
| | | | F04B H01M B60V B64D B64U |
| Y | US 5 645 950 A (BENZ UWE [DE] ET AL) 8 July 1997 (1997-07-08) * figure 1 * | 13 | |

The present search report has been drawn up for all claims

| Place of search | Date of completion of the search | Examiner |
|---|---|---|
| The Hague | 3 November 2025 | Oliveira, Damien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 672 387 A1**

## ANNEX TO THE EUROPEAN SEARCH REPORT
## ON EUROPEAN PATENT APPLICATION NO.

EP 25 17 9703

03-11-2025

| Patent document cited in search report | | Publication date | Patent family member(s) | | Publication date |
|---|---|---|---|---|---|
| WO 03021702 | A1 | 13-03-2003 | GB | 2394355 A | 21-04-2004 |
| | | | WO | 03021702 A1 | 13-03-2003 |
| DE 102012007377 | A1 | 17-10-2013 | NONE | | |
| US 5645950 | A | 08-07-1997 | DE | 4318818 A1 | 08-12-1994 |
| | | | DE | 9422387 U1 | 12-04-2001 |
| | | | EP | 0629013 A2 | 14-12-1994 |
| | | | EP | 0629014 A2 | 14-12-1994 |
| | | | JP | 2684159 B2 | 03-12-1997 |
| | | | JP | 2743147 B2 | 22-04-1998 |
| | | | JP | H0714597 A | 17-01-1995 |
| | | | JP | H0714599 A | 17-01-1995 |
| | | | US | 5432020 A | 11-07-1995 |
| | | | US | 5434016 A | 18-07-1995 |
| | | | US | 5645950 A | 08-07-1997 |

EPO FORM P0459